# EUROPEAN PATENT SPECIFICATION

(11) **EP 1 715 261 B1**
(45) Date of publication and mention of the grant of the patent: **04.04.2012**
(21) Application number: 05380065.2
(22) Date of filing: 07.04.2005
(51) Int. Cl.: F24J 2/46, F24J 2/04, F24J 2/20, E04D 3/24

(54) **Solar energy collecting modular element for enclosure, and modular system for forming solar energy collecting enclosures on buildings**
Modulares Solarenergiekollektorelement für eine Einhausung und modulares System zur Bildung von Sonnenenergie sammelnden Einhausungen auf Gebäuden
Elément modulaire de captage d'énergie solaire pour un boîtier et système modulaire pour la formation des boîtiers captant d'énergie solaire sur batîments

(43) Date of publication of application: 25.10.2006
(73) Proprietor: Garcia Cors, Josep, 08172 Sant Cugat del Vallès (Barcelona) (ES); Garcia Sanchez, José, 08110 Montcada I Reixac Barcelona (ES)
(72) Inventor: Garcia Cors, Josep, 08172 SANT CUGAT DEL VALLÉS (Barcelona) (ES); Gracia Sànchez, José, 08172 SANT CUGAT DEL VALLÉS (Barcelona) (ES)
(74) Representative: Gislon, Gabriele

(56) References cited:
- EP-A- 0 032 667
- WO-A-99/63280
- WO-A-2004/083556
- DE-A1- 4 002 892
- FR-A- 2 436 230
- GB-A- 2 019 554
- US-A- 4 010 733
- US-A- 4 184 476
- US-A- 4 243 020
- US-A- 4 308 858
- US-A- 4 473 066
- PATENT ABSTRACTS OF JAPAN vol. 008, no. 032 (M-275), 10 February 1984 (1984-02-10) & JP 58 187753 A (MITSUBISHI DENKI KK), 2 November 1983 (1983-11-02)
- PATENT ABSTRACTS OF JAPAN vol. 008, no. 100 (M-295), 11 May 1984 (1984-05-11) & JP 59 013856 A (MATSUSHITA DENKO KK), 24 January 1984 (1984-01-24)

## Description

### Scope of the invention

This invention relates to a modular solar energy-collecting enclosure element provided with configurations for water-tight joining to other adjacent modular elements in both longitudinal and transversal directions, in relation to the possible flow of water over them, establishing water-tight joints in order to form a facade or roof of a building. This invention also relates to a modular system for forming solar energy-collecting enclosures on buildings, applicable to façades and roofs, which includes the modular solar energy collection enclosures of the invention, together with a plurality of supplementary roof elements provided with similar configurations for their water-tight joining, together with other structural elements.

### Prior art

The use in a building of panels that perform the functions of both closing off the building and that of collecting solar heat-energy is known.

The document FR-A-2345672 describes a solar energy collector consisting of a plate with facing corrugations or parallel undulations that is joined to another flat plate along the lengths of the areas between the undulations forming channels through which a heat-carrying fluid is able to flow. The specification in this document does not describe nor suggest the use of said collector as a self-supporting element forming a roof and the mentioned joints between the plates using adhesive could turn out to be too weak if employed for this purpose. As a solar energy collector, the construction using corrugated plates leaves all the ends of the channels open, which must be then connected by means of, for example, collecting and distributing ducts for collector operation, which entails a significant amount of work, which would increase the final cost of the product.

The utility model ES-A-235692 describes a solar energy collector element consisting of a pair of facing plates that are joined at their edges by welding or seaming. One of said plates is shaped by means of substantially parallel depressions that communicate at their two ends with end transversal depressions, while the other plate is flat. It is intended that the areas between the depressions of the outer plate are joined to the inner plate by lines of welded points. The parallel depressions form a number of channels for a heat-carrying fluid and the end transversal depressions form both a collector and a distributor. However, the welds, especially in the areas between the depressions, are quite difficult and slow to produce. On the other hand, the seaming of only the peripheral edges does not ensure sufficient strength for the assembly to perform a function, for example, of self-supporting roof, nor does it guarantee the leak-tightness between the channels with the element serving as a solar energy collector.

Patent ES-A-479755 describes an absorber for a solar collector that comprises two press-formed thin plates welded together along their periphery, the plates being press-formed according to a pattern of repeated shapes, geometrically distributed and displaced with respect to the shapes of the opposite plate, so that it forms a network of channels for a heat-carrying fluid. The plates are also joined by a plurality of welded points distributed along the non-sunken, backed areas of the plates. Aforementioned drawbacks associated with welding persists in this construction; namely, the welding operation that is both costly in time and money, the difficulty in checking the leak-tightness and the excessive heating of the plates during welding. In addition, the suggested press-formed shapes, which consist of separate squares or rectangles, geometrically distributed over the plates, do not provide any significant increase in the stiffness of each of the plates in any given direction, so that the increase in rigidity of the two joined plates is only the sum of strength of the two superposed plates without any two-dimensional cooperation between them in order to increase this strength.

Patent application WO 99/63281 describes a building roof that also accomplishes the function of a solar energy collector. According to one aspect, said roof comprises adjacent panels, each of which comprises a plate with a large number of longitudinal channels formed, at least in part, with the very plate material and connected at both ends to collecting and distributing ducts. The adjacent panels comprise configurations for coupling the respective panels together in a waterproof fashion and inlets and outlets communicating respectively with the distributing and collecting ducts for connecting the ducts together and with a general circuit for a heat-carrying fluid. The geometrical configuration of the channels and other elements are designed for the panel to be self-supporting. However, the construction of each of said panels involves the manufacture, assembly and joining of multiple parts, which increases the costs of the end product

Patent US-A-4010733 describes a solar collector for to be integrated into a building structure comprised of two facing panels that are joined together by a welding bead along the perimeter. Conformations in the plates define a circuit for a heat-carrying fluid with an inlet and outlet. In order to form a roof, the lateral waterproofing between adjacent panels is resolved by means of an additional part that covers another part allowing the fitting of two panes of glass. However, this does not resolve the butt joining between modules at their longitudinal ends, in the direction of roof slope, which means the slope has to be covered by a single panel along its entire length. This means that the panels have to be manufactured in a single piece to cover the full length of the roof, which then either limits the length of roof to be covered or significantly long panels have to be manufactured which, on the one hand, complicate the production process and, on the other, reduce the energy-collecting performance. This is due to the fact that the heat-carrying fluid circulating inside the panel absorbs the greatest amount of heat that it is able to absorb in the approximately first three metres of panel length, thereby there is a very low performance over the remaining panel length. In addition, although the lateral shapes provide inertia and a certain structural capacity, this might not be sufficient to withstand a usage overload at the centre of the panel, for example, in the case of a walkable roof. Moreover, the fact that the panels are covered underneath by insulation to overcome the thermal bridge makes it difficult to resolve the meeting with other structural profiles that support it, thereby the preferred embodiment of said patent proposes to locate the panels on top of a board. In addition, this solar energy collector is covered by glass, which means that a roof consisting of several of the same would be practically non-walkable.

Utility model ES-A-1054282, from one of the current inventors, describes a multi-function panel that is useful for the construction of a solar energy collector enclosure for a building. The mentioned multi-function panel is made up of upper and lower facing plates that are joined together in a sealed fashion along a closed perimeter by means of a joining technique known as "clinching". Respective side-to-side fins that are mutually seamed or covered by an additional covering element resolve the join between the longitudinal edges of adjacent panels. The joins between the transversal edges of adjacent panels is simply made by overlapping a free protruding portion next to the downstream edge of the outer plate over a portion next to the upstream end of the upper plate of an adjacent panel.

A further document EP-A 0032667 shows all the features of the preamble of claim 1.

There is no state of the art document that describes or suggests a male-female joint for the outer and inner plates at the transversal edges of adjacent panels.

There is an object of the present invention to provide a modular enclosure solar energy-collector element that can be produced from two facing plates in a relative simple manner, having sufficient strength to be self-supporting and provided, at both longitudinal and transversal edges in relation to the direction of a possible flow of water over it, with configurations for leak-tight joining to other adjacent elements, whether these are modular solar energy-collecting enclosure modules or simply complementary enclosure elements.

There is another object of the present invention to provide a modular system for forming solar energy collector enclosures on buildings comprising structural elements, modular solar energy-collecting enclosure elements and other complementary enclosure elements that are adapted to be assembled together at both longitudinal and transversal edges in relation to the direction of a possible flow of water over them, thus establishing leak-tight joints to form a building enclosure, applicable to both the façade and roof.

### Description of the invention

Throughout this specification, the terms "upstream", "downstream", "longitudinal" and "transversal" will be employed in relation to the possible flow of water over the enclosure. This means that since the building enclosure is adapted to receive rainwater and evacuate it by gravity, the elements that make it up are installed with a certain inclination, in the case of a roof, or completely vertical, in the case of a façade, in order to direct the possible flow of water in a desired direction, and the enclosure component parts are constructed taking this direction into account. The term "outer" is used to refer to the side of the enclosure that is exposed to the rain and sunlight and the term "inner" refers to the unexposed side of the enclosure.

According to a first aspect, this invention comprises a modular solar energy collection enclosure element for buildings, applicable to both façade and roof, of the type comprising an outer plate and an inner plate, facing each other and joined together by at least one leak-tight joint line along a closed perimeter, with at least one of said outer and inner plates including one or more structures within said perimeter, spaced apart from the other of the plates to form a circuit for a heat-carrying fluid with an inlet and an outlet. The modular element of this invention is characterised in that said leak-tight joint line is at a distance from the downstream transversal edges from the outer and inner plates in relation to the direction of a possible flow of water over the outer plate. This will produce an accessible gap between respective free outer and inner portions of outer and inner plates downstream from the joint line. This accessible gap is adapted to receive plug-connected a free portion located next to an upstream transversal edge of an outer plate of a similar modular solar energy-collecting enclosure element, or of an adjacent complementary enclosure element located downstream.

In an exemplary embodiment, the leak-tight joint line is also at a distance from the upstream transversal edges of the outer plate, providing a free outer portion of the outer plate upstream from the joint line. This free upstream outer portion of the outer plate is adapted to be plug-connected within said accessible gap of an adjacent similar modular solar energy-collecting enclosure element located upstream, or in the free space existing between two outer and inner plates of an adjacent complementary enclosure element located upstream. The outer plate has longitudinal edges in relation to the direction of a possible flow of water over it, from which respective fins extend upwards that are configured and arranged so that they respectively match up with fins of an adjacent similar modular solar energy-collecting enclosure element located on the corresponding side, or with similar fins of an adjacent complementary enclosure element located on the corresponding side. The matched fins can then be mutually seamed or clamped at the top by means of a fitted additional cover element, in accordance with a technique known in the sector. In this way, the modular solar energy-collecting enclosure element in accordance with this invention can be coupled to other similar enclosure elements and/or complementary enclosure elements at any of the four edges to establish leak-tight joints to form a building enclosure, such as, a façade or roof.

One other important aspect of the modular solar energy-collecting enclosure element is that from opposite edges of the lower plate respective flaps, which terminate in folds that extend towards each other, extend towards the inner side. These flaps and folds form stiffening and support elements. In a characteristic fashion, reinforcing members extend from one to another of said flaps, with their ends fitting into the folds, thereby said reinforcing members act in conjunction with the flaps and folds as stiffening elements.

The heat-transporting circulation circuit within the modular solar energy-collecting enclosure element is formed, as is conventional in the state of the art, by a conformation of the outer plate, the inner plate, or both, and many examples of different configurations for such a structure are known in the art. The leak-tight joint line between the two plates is preferably produced by welding, although a leak-tight joint line achieved by any other technique is within the scope of this invention. Since the cited plate conformations are within the closed perimeter defined by the joint line, the circuit's leak-tight property is obtained without any type of cap or additional plugging elements for the plate edge conformations.

In an exemplary embodiment, the inner plate of the modular solar energy-collecting enclosure element, in accordance with this invention, includes heat insulation sheets housed between the mentioned reinforcement members, with their ends matched to the flaps and folds. The assembly may be closed by some means that act as a vapour barrier and/or to prevent any possible thermal bridges and/or against fire. Because of this the modular solar energy-collecting enclosure element incorporates all the necessary elements for a building enclosure and for a solar heat-energy collector, so that it is completely suitable for direct installation onto a sub-structure, it is self-supporting in order to withstand the required structural stresses of a roof or façade and efficiently complies with the two cited functions integrated into a single modular element.

In accordance with a second aspect, this invention comprises a modular system that forms solar energy collector enclosures for both building façades and roofs, characterised in that it comprises a plurality of enclosure elements that include at least one modular solar energy-collecting enclosure element in accordance with this invention (described above), together with at least one complementary enclosure element, which is provided with, along at least one longitudinal or transversal edges in relation to the direction of a possible flow of water over it, at least one joint configuration for a leak-tight joint with an adjacent edge of said modular solar energy-collecting enclosure element. These complementary enclosure elements include, for example, ridge part elements, gutter elements, lateral enclosure elements and complementary modular plates as described below.

With a plurality of such modular solar energy-collecting enclosure elements and complementary enclosure elements coupled together, it is possible to form a building enclosure that complies with all waterproofing and insulation functions of a traditional enclosure, whether a roof or façade, and in addition a function as a solar heat-energy collector. The system also includes some structural elements adapted to support the panels and at the same time house piping that are part of a primary circuit for the heat-carrying fluid to which the heat-carrying fluid circuits of the modular solar energy-collecting enclosure element being part of the enclosure communicate. Another advantage of this invention is that it includes fastening elements between the modular element and the structural elements which in no case come into contact with solar energy-collecting outer plate, but instead the securing is produced between the structural elements, the inner plate and its associated reinforcements.

Thereby, an enclosure produced using the system of this invention has several advantages. On the one hand, since the actual solar energy-collecting surface, in other words, the outer plate, is shaped at its longitudinal and transversal edges for coupling to the outer plates of the adjacent enclosure elements, a solid and waterproof joint is obtained between all enclosure elements, whether these are solar energy collectors or complementary enclosure elements, which guarantees a waterproof system. Moreover, all the elements related with the solar energy-collecting installation are hidden from view, so that when the system is employed as a roof, it still offers the appearance of a traditional clear roof, without any piping, connections, joint profiles or other heat-carrying fluid primary circuit elements being visible. When the system is employed as a façade, it provides an equally clear appearance, which is also both functional and modern. On the other hand, thanks to stiffening elements that are incorporated into the modular elements, when the system forms a roof, this is walkable, for example, to facilitate its maintenance, together with the maintenance of the heat-carrying fluid primary circuit, which comprises piping housed inside profiles that are accessible from the outside.

### A brief description of the drawings

The previous and other advantages and characteristics will be more fully understood from the following detailed description of exemplary embodiments with reference to the attached drawings, in which:
Figure 1 is an exploded perspective view of a modular solar energy-collecting enclosure element in accordance with an exemplary embodiment of this invention;
Figure 2 is a partial simplified schematic view showing in cross section the coupling of the transversal edges of two adjacent modular solar energy-collecting enclosure elements of Figure 1;
Figure 3 is an exploded perspective view of a modular solar energy-collecting enclosure element in accordance with another exemplary embodiment of this invention;
Figure 4 is a partial simplified schematic view showing in cross section the coupling of the transversal edges of two adjacent modular solar energy-collecting enclosure elements of Figure 3;
Figure 5 is an upper partial perspective view of the coupling of two modular solar energy-collecting enclosure elements of Figure 1;
Figure 6 is a lower perspective view showing the partially sectioned parts of a modular solar energy-collecting enclosure element such as that of Figure 1, including stiffening, waterproofing and insulation elements;
Figure 7 is a partial cross sectional view showing the coupling of the longitudinal edges of two modular solar energy-collecting enclosure elements of Figure 6 with an open profile that houses piping that forms part of a heat-carrying fluid primary circuit;
Figure 8 is a partial perspective view showing an exemplary installation of several modular solar energy-collecting enclosure elements of Figure 6 as a façade, employing the open profiles of Figure 7;
Figure 9 is an enlarged cross sectional view of the longitudinal edge coupling of two adjacent modular solar energy-collecting enclosure elements of Figure 6 employing an additional cover element;
Figure 10 is a partial perspective view showing another exemplary installation of several modular solar energy-collecting enclosure elements of Figure 6 as a façade, employing the additional cover elements of Figure 9, together with some complementary modular plates;
Figure 11 is a partial perspective view showing yet another exemplary installation of several modular solar energy-collecting enclosure elements of Figure 3 as a façade, employing the open profiles of Figure 7;
Figure 12 is a partial cross section view of the coupling of two modular solar energy-collecting enclosure elements of Figure 6, employed as a roof and its joint to a support profile with enlarged detail;
Figure 13 is a partial perspective view showing an exemplary installation of several modular solar energy-collecting enclosure elements of Figure 1 as a roof, with some ridge part elements;
Figure 14 is a partial perspective view showing an exemplary installation of several modular solar energy-collecting enclosure elements of Figure 1 as a roof, using a lateral enclosure element; and
Figure 15 is a partial perspective view showing yet another exemplary installation of several modular solar energy-collecting enclosure elements of Figure 1 as a façade, with a trim element that co-operates with a gutter.

### Detailed description of some exemplary embodiments

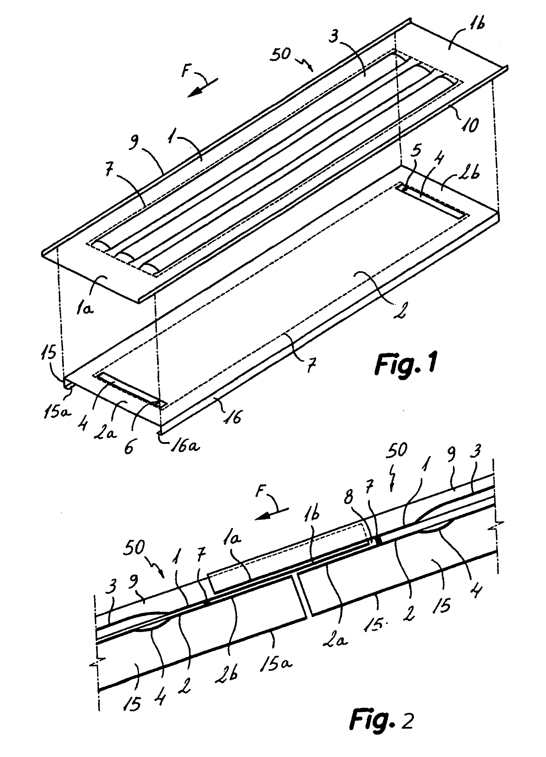

First referring to Figure 1, reference numeral 50 generally refers to a modular solar energy-collecting enclosure element for buildings, applicable to both roofs and façades in accordance with an exemplary embodiment of the first aspect of this invention. The mentioned modular solar energy-collecting enclosure element 50, in its most elementary version, comprises an outer plate 1 and an inner plate 2, facing each other and joined together by at least one leak-tight joint line 7 along the length of a closed perimeter. In Figure 1, the position of this leak-tight joint line 7, which can be obtained, for example, by a continuous roll welded bead, is shown as dotted lines 7 in relation to outer plate 1 and inner plate 2. In the shown exemplary embodiment, the outer plate 1 includes, within the perimeter defined by the leak-tight joint line 7 some conformations 3 that define three slightly concave channels on the inner side of the outer plate 1, which run parallel to the longitudinal direction in relation to direction F of a possible flow of water over outer plate 1 as indicated by an arrow F. The inner plate 2 includes, within the perimeter defined by the leak-tight joint line 7 some conformations 4 that define a pair of slightly concave channels on the inner side of the inner plate 2, which run transversally to the channels defined by the conformations 3 on the outer plate 1 and face the ends of the same. When the two plates, outer plate 1 and inner plate 2 are joined, the respective conformations 3 and 4 are spaced apart from the other of the plates forming a circuit for a heat-carrying fluid, which has an inlet 5 and an outlet 6 in the form of two orifices, preferably located at diagonally opposite ends of the circuit. Optionally, in order to ensure that there is no increase of heat-carrying fluid pressure inside the modular solar energy-collecting enclosure element 50, the mentioned inlet 5 has a flow section area that is smaller than that of said outlet 6.

The channels defined by the conformations 4 of the inner plate 2 act as distributor and collector for the mentioned heat-carrying fluid which circulates through the channels defined by conformations 3 of the outer plate 1, producing an efficient, uniform "sweep" of the surface heated by sunlight for optimum thermal use. To rigidise the plates 1 and 2 against a possible deformation caused by the inner pressure of heat-carrying fluid, the two plates 1 and 2 can be joined together by means of joint lines (not shown) between the channels within the perimeter defined by the leak-tight joint line 7. In the state of the art, many alternative examples for the conformations 3 and/or 4 are known which are them all of application in this invention. Preferably, the outer plate 1 is chemically treated or painted in order to enhance its capacity to absorb sunlight and to reduce its reflection or emission ability.

One essential feature of the modular solar energy-collecting enclosure element 50 of this invention is that the leak-tight joint line 7 is some distance away from the downstream transversal edges of the outer and inner plates 1 and 2, in relation to direction F of a possible flow of water over outer plate 1, as is better shown in Figure 2. Thereby, the outer and inner plates 1 and 2 present respective outer and inner free portions 1a, 2a downstream from the joint line 7, and between these two free portions 1a, 2a an accessible gap 8 is enabled, which is adapted to receive plug-connected a free portion located next to an upstream transverse edge of a similar outer plate of a modular solar energy-collecting enclosure element 50, or of an adjacent complementary enclosure element located downstream. It should be taken into account that in Figure 2, the thicknesses of the plates 1, 2 and of the leak-tight joint lines 7 have been exaggerated for better drawing clarity. This male-female joint provides a mechanical connection that is able to withstand, for example, a wind suction effect that tends to raise the modular solar energy-collecting enclosure element 50 located upstream, and to make it difficult for rainwater to ascend against the slope when driven by the wind.

Advantageously, the leak-tight joint line 7 is also is spaced away from the upstream transversal edge of outer plate 1, providing a free outer portion 1b of the outer plate 1 upstream from the leak-tight joint line 7. This free outer portion 1b upstream from outer plate 1 is adapted to be plug-connected in said accessible gap 8 of a similar adjacent modular solar energy-collecting enclosure element 50, 60 located upstream or in a free space between two outer and inner plates of an adjacent complementary enclosure element located upstream. In this way, a male-female joint is obtained between the two transverse edges of the modular solar energy-collecting enclosure element 50 with the corresponding transverse edges of other modular solar energy-collecting enclosure elements 50 or adjacent complementary enclosure elements located upstream or downstream.

Although it is not essential, in the shown exemplary embodiment, the leak-tight joint line 7 also provides a free inner portion 2b of inner plate 2 upstream from the leak-tight joint line 7. In this case, the downstream and upstream outer free portions, 1a, 1b of the outer plate 1 are longer than the corresponding downstream and upstream free inner portions 2a, 2b of the inner plate 2, so that, when two similar modular solar energy-collecting enclosure elements 50 are plug-connected, the corresponding downstream and upstream free inner portions 2a, 2b of the respective inner plates 2 do not overlap not do they come into contact with each other.

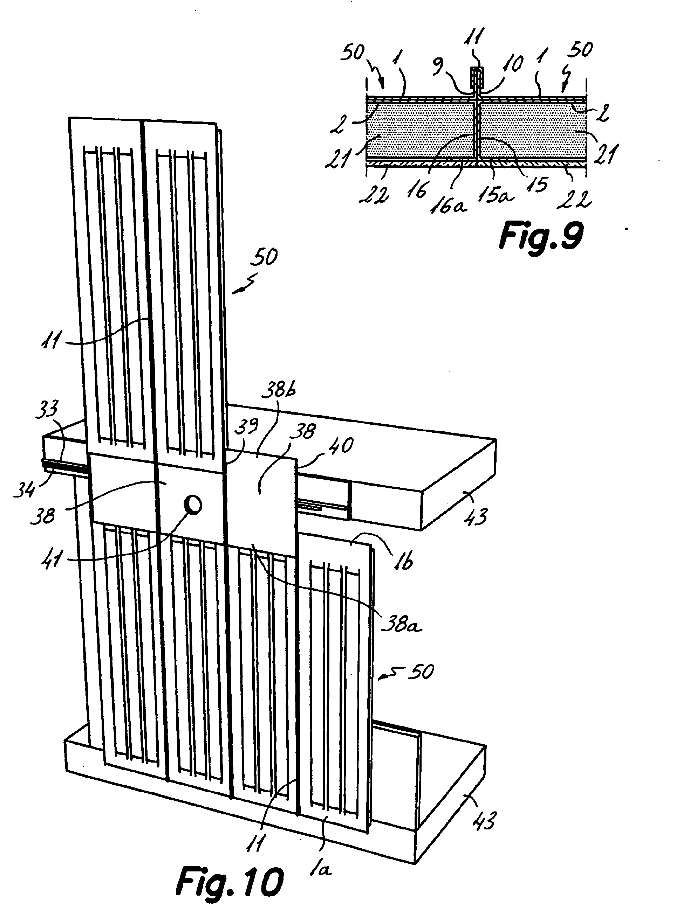

The outer plate 1 has longitudinal edges in relation to the mentioned direction F of a possible flow of water over it, from which respective fins 9 and 10 extend upwards, said fins 9 and 10 being shaped and arranged to match with fins 10 and 9 of a similar adjacent modular solar energy-collecting enclosure element 50 located on the corresponding side, or with similar fins on an adjacent complementary enclosure element located on the corresponding side as will be additionally described below. The fins 9, 10, once matched, can then be mutually seamed or clamped at the top by means of a fitted additional cover element 11, which is push-fitted in place (Figure 9), in accordance with well-known techniques in the sector.

From opposite edges of the inner plate 2, which, in the exemplary embodiment shown in Figure 1 are said longitudinal edges, respective flaps 15 and 16 extend towards the inner side with folds 15a, 16a at their ends that extend towards each other. It should be noted that the modular solar energy-collecting enclosure element 50 of Figure 1 has an elongated quadrilateral shape and said opposite edges of the inner plate 2 from which the flaps 15, 16 extend, are the longest lateral edges. Thus, these flaps 15, 16 and folds 15a, 16a act as stiffening elements for the modular elements against flexion in the direction of the longest dimension and support. However, these longest opposite edges do not necessarily have to always coincide with the longitudinal edges.

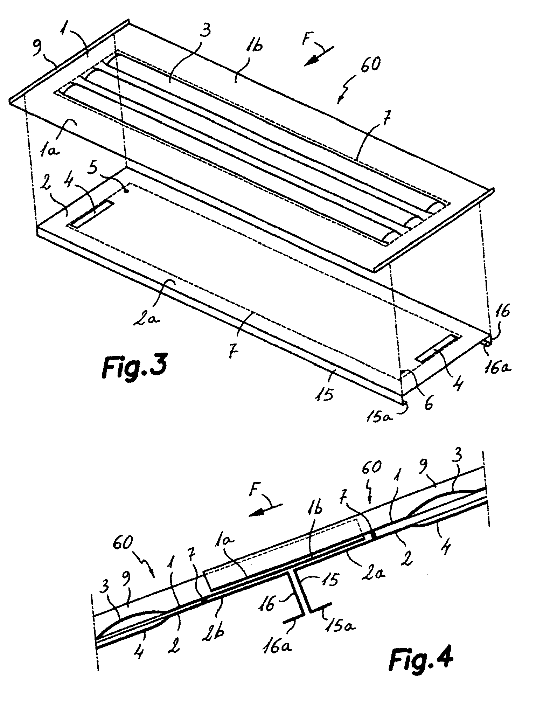

Figure 3 shows a modular solar energy-collecting enclosure element 60 in accordance with another exemplary embodiment which identical to the example of Figure 1, except that here, the longitudinal edges, in relation to the direction F of a possible flow of water over the outer plate 1, are the shortest opposite edges, so that the flaps 15, 16 extend from the transverse edges. Otherwise, the outer plate 1 has the conformations 3, which, in this case, define channels that extend in the transverse direction and fins 9, 10 which extend from the longitudinal edges. The inner plate 2, together with flaps 15, 16, incorporate the conformations 4, which here define channels that extend in the longitudinal direction, and the inlet and outlet orifices 5, 6. In this exemplary embodiment, the channels determined by the conformations 4 of the inferior plate 2 cooperate with the channels determined by the conformations 3 of the outer plate 1 in order to provide a single twisting path for the heat-carrying fluid from the inlet 5 to the outlet 6, which is different from the "sweep" provided in the exemplary embodiment of Figure 1. The leak-tight joint line 7 is similarly spaced from the downstream and upstream transverse edges providing as shown in the schematic view in Figure 4, the accessible gap 8 between the two downstream free outer and inner portions 1a, 2a of the outer and inner plates 1, 2 and upstream free outer and inner portions 1b, 2b of the outer and inner plates 1, 2, the downstream accessible gap 8 of a modular solar energy-collecting enclosure element 60 being adapted to receive plug-connected the upstream outer free portion 1b of another adjacent modular solar energy-collecting enclosure element 60 locate downstream, or the upstream free portion of the outer plate of an adjacent complementary enclosure element located downstream. Also in Figure 4, the thicknesses of the plates 1, 2 and the leak-tight joint lines 7 have been exaggerated for enhanced drawing clarity.

By comparing Figures 2 and 4 it can be seen that, whereas in Figure 2, the flaps 15, 16 and folds 15a, 16a of the two plug-connected modular solar energy-collecting enclosure elements 50 are mutually aligned, in Figure 4, the flaps 15, 16 and folds 15a, 16a of the two plug-connected modular solar energy-collecting enclosure elements 60 are mutually side-by side and opposite.

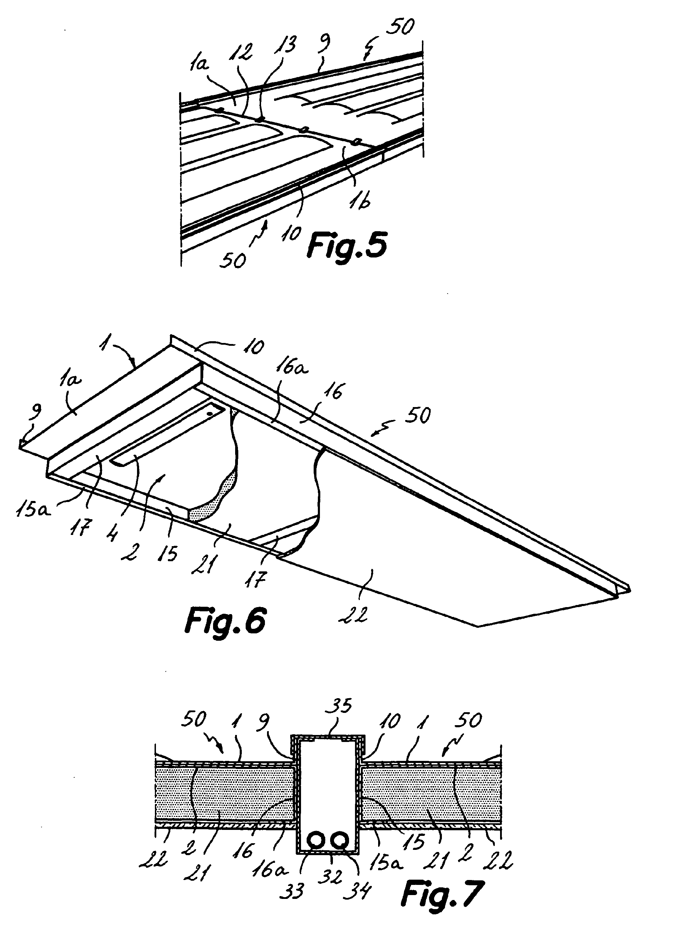

Now referring to Figure 6, the modular solar energy-collecting enclosure element 50 optionally incorporates other necessary or recommended elements for a building enclosure, whether façade or roof. It should be stressed that, although Figure 6 shows said elements incorporated into a modular solar energy-collecting enclosure element 50 in accordance with the exemplary embodiment of Figure 1, an identical construction is valid for a modular solar energy-collecting enclosure element 60 in accordance with the exemplary embodiment of Figure 3, because in both cases, the flaps 15, 16 and folds 15a, 16a extend from the longest opposite edges of the inner plate 2.

Thus, in Figure 6, the modular solar energy-collecting enclosure element 50 incorporates reinforcing members 17 that extend from one to the other flaps 15, 16 with their ends fitting into the folds 15a, 16a. These reinforcing members 17 act in conjunction to rigidise the assembly against flexion in the direction of the shortest dimension, in a complementary manner to the flaps 15, 16 and folds 15a, 16a, which act as stiffening elements in the longest dimension. Preferably, the assembly includes a reinforcement member 17 at each end, together with one or more reinforcing members 17 in intermediate positions. For example, wood is a suitable material for the reinforcing members 17. Between the reinforcing members 17 the panels 21 are installed, with their ends matched to the folds 15a, 16a of the flaps 15, 16 of the inner plate 2. These panels 21 are made of a heat-insulating material that performs the functions of thermal insulation for the building in both closed and ventilate enclosures. Externally fixed to the folds 15a, 16a of the flaps 15, 16 of the inner plate 2 is a plate 22 that covers the reinforcing members 17 and the panel 21. This plate 22 is made of a single or composite material that is suitable for forming a vapour barrier and/or breaking a thermal bridge, and/or for providing fire protection as required. In the state of the art in the sector, several suitable materials are known for both the panels 21 and the plate 22.

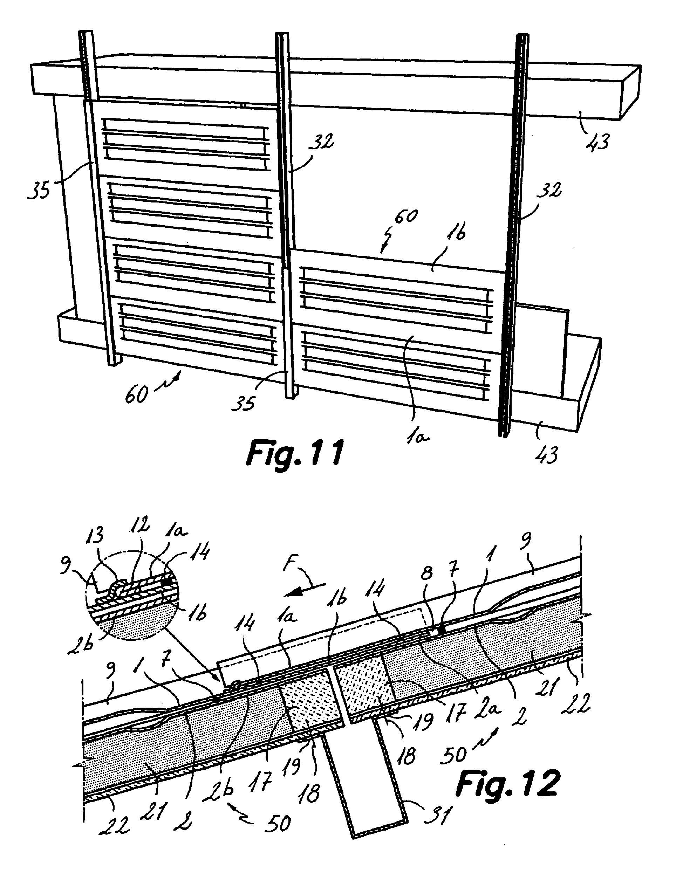

Figure 12 shows the cross section of the coupling between two modular solar energy-collecting enclosure elements 50 in their most complete version, in which the transverse edge of the downstream free portion 1a of the outer plate 1 has a fold 12 (see the enlarged detail), which rigidises said transverse edge and, in virtue of a certain elasticity of the plate, mechanically acts as a leak-tight barrier against the outer plate 1 of the adjacent modular solar energy-collecting enclosure element 50 located downstream or against the outer plate of a complementary enclosure element. In order to further guarantee the joint, the outer plate 1 has several tabs 13 (also see Figure 5) adhered at a distance from its upstream transverse edge, that are adapted to match with the fold 12 of the transverse edge of the downstream free portion 1a of the plate 1 of the adjacent modular solar energy-collecting enclosure element 50 located upstream, or the downstream transverse edge of the outer plate of an adjacent complementary enclosure element located upstream. Moreover, one or more leak-tight strips 14 of an elastomeric material are transversally arranged on the outer face of the upstream free portion 1b of the outer plate 1. When two modular solar energy-collecting enclosure elements 50 are coupled together, these leak-tight strips 14 are compressed between the downstream free portion 1 a of the outer plate 1 of the modular solar energy-collecting enclosure element 50 located upstream and the upstream free portion 1b of the outer plate 1 of the modular solar energy-collecting enclosure element 50 located downstream. Obviously, a similar result could be achieved by fixing the leak-tight strips to the inner face of the outer downstream free portion 1 a of the outer plate 1, or on the outer plate of an adjacent complementary enclosure element to which the modular solar energy-collecting enclosure element 50 is coupled.

In accordance with a second aspect, this invention provides a modular system to form solar energy collector enclosures for buildings, applicable to both façades and roofs, which comprise a plurality of enclosure elements, including at least one modular solar energy-collecting enclosure element 50, 60 in accordance with any of the exemplary embodiments described above and at least one complementary enclosure element 28, 29, 37, 38 that has, on at least one of its longitudinal or transverse edges, in relation to the direction F of a possible flow of water over it, at least one joint configuration for a leak-tight joint with an adjacent edge of said modular solar energy-collecting enclosure element 50, 60. With a combination of these modular solar energy-collecting enclosure elements 50, 60 and complementary enclosure element 28, 29, 37, 38, coupled together, a completely leak-tight enclosure of any size can be formed. The system of the second aspect of this invention also provides structural elements for supporting and securing the enclosure elements.

Figure 7 shows an open profile 32 which houses piping 33, 34 that forms part of a heat-carrying fluid primary circuit that communicates with the heat-carrying fluid circuit of one or more modular solar energy-collecting enclosure elements 50, 60 incorporated into the enclosure. The mentioned open profile 32 is adapted to fit between two modular solar energy-collecting enclosure elements 50, 60, so the fins 9, 10 of its respective adjacent longitudinal edges, which are matched together, are joined to lateral walls of the open profile next to a mouth on the same. In order to make the joint between the two modular solar energy-collecting enclosure elements 50 leak-tight, a cover element 35 is used to clamp the upper parts of fins 9, 10 in a leak-tight manner and covering said mouth on the open profile 32. This cover element 35 is preferably plug-connected and is detachable in order to provide access to said open profile 32 from the outside, for example, for maintenance of the piping 33, 34. Obviously, a similar installation could be executed with a modular solar energy-collecting enclosure element 50, 60 on one side of the open profile 32 and a complementary enclosure element on the other side, provided that this complementary enclosure element is provided with a corresponding fin matched with the open profile 32.

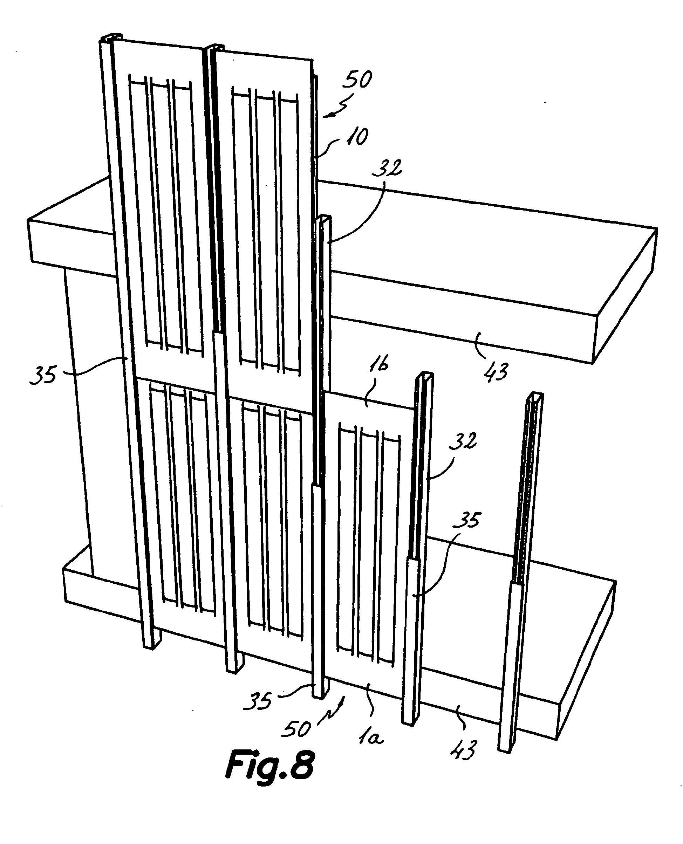

As shown in the exemplary installation of Figure 8, the open profile 32 is structural and adapted to be secured to a building structure 43. In this case, a plurality of modular solar energy-collecting enclosure elements 50 in accordance with the exemplary embodiment of Figure 1 are arranged between open profiles 32, acting as a façade. The leak-tightness between the transverse (shortest) edges of the modular solar energy-collecting enclosure elements 50 is accomplished by the plug-in coupling described above in relation with Figure 2, while the leak-tightness between the longitudinal (longest) edges of the modular solar energy-collecting enclosure element 50 is produced by the cover elements 35, which also covers the mouths of the open profiles 32.

Figure 11 shows another exemplary installation in which the open profiles 32 are secured to a building structure 43 and modular solar energy-collecting enclosure elements 60 in accordance with the exemplary embodiment of Figure 1 are arranged between these open profiles 32, acting as a façade. The leak-tightness between the transverse (longest) edges of the modular solar energy-collecting enclosure elements 60 is accomplished by the plug-in coupling described above in relation with Figure 4, while the leak-tightness between the longitudinal (shortest) edges of the modular solar energy-collecting enclosure element 60 is produced by the cover elements 35, which also covers the mouths of the open profiles 32.

Figure 10 shows another exemplary installation applied to a façade that does not use the open profiles 32. Here, a plurality of modular solar energy-collecting enclosure elements 50, in accordance with the exemplary embodiment of Figure 1, are applied to a building structure 43 in an adjacent fashion, covering the main extension of the enclosure. The leak-tightness between the transverse (shortest) edges of the modular solar energy-collecting enclosure elements 50 is accomplished by the plug-in coupling described above in relation with Figure 2, while the leak-tightness between the longitudinal (longest) edges of the modular solar energy-collecting enclosure element 50 is produced by means of the cover elements 11 that are pressure fitted onto the respective fins 9 and 10, as shown in Figure 9, although the same result could be obtained by mutually seaming the fins 9 and 10.

Optionally, as shown in Figure 10, a complementary enclosure element in the form of a complementary modular plate 38 is located between the transverse (shortest) edges and includes, next to its downstream transverse edge, an accessible gap between the downstream free portions 38a of outer and inner plates, said accessible gap being able to receive plug-connected the upstream free portion 1b of the outer plate 1 of an adjacent modular solar energy-collecting enclosure element 50 located downstream. The complementary modular plate 38 also includes, next to its upstream transverse edges, an upstream free portion 38b of an outer plate adapted to be plug-connected in the accessible gap 8 existing next to the downstream transverse edge of the adjacent modular solar energy-collecting enclosure element 50 located upstream. Next to its longitudinal edges, the complementary modular plate 38 includes fins 39, 40 adapted to be matched and attached to corresponding fins 9, 10 of the modular solar energy-collecting enclosure element 50 located on the corresponding side, and/or with the fin 40, 39 of the complementary modular plate 38 located on the corresponding side. The utility of this complementary modular plate 38 is, for example, that of covering piping 33, 34 installed on the structure 43. This piping can be part of, for example, a heat-carrying fluid primary circuit, with which the heat-carrying fluid circuit of one or more modular solar energy-collecting enclosure elements 50 incorporated into the enclosure is communicated. By suitably designing the lengths of the free portions 38a, 38b of the complementary modular plates 38, these can be detachable to allow access to or inspection of piping 33, 34. Alternatively, the complementary modular plates 38 can be made from a single plate with its downstream end merely overlapping the outer plate 1 of the corresponding modular solar energy-collecting enclosure element 50, without providing the mentioned accessible gap between the plates, which would increase its detachable nature. Another use of the complementary modular plates 38 is that of providing an opening 41 for, for example, a ventilation duct or other building construction element. The opening 41 is possible because the complementary modular plates 38 do not include a heat-carrying fluid circuit and hence, are not solar energy collectors.

It should be pointed out that, although the exemplary installation of Figure 10 is shown employing modular solar energy-collecting enclosure elements 50 in accordance with Figure 1 as a façade, a similar installation would be possible using modular solar energy-collecting enclosure elements 50 in accordance with Figure 1 as a roof or employing modular solar energy-collecting enclosure element 60 in accordance with Figure 2, either as a façade or a roof, being able, in any case, to be combined with complementary modular plates 38.

As shown in Figure 12, when the modular solar energy-collecting enclosure elements 50 or 60 are employed as a roof (although not limited to this), the system comprises support profiles 31 adapted to be secured to a building structure 43 and provided with support surfaces that are intended to bear the modular solar energy-collecting enclosure elements 50 or 60 and other complementary enclosure elements. The cited support profiles 31 have a U-shaped cross section that is significantly deep in order to provide good flexion strength and they also possess lateral fins that form the cited support surfaces. These lateral fins include elongated holes 19 that allow the installation of fastening elements 18 (symbolically represented by their axes) that can be fixed to the modular solar energy-collecting enclosure elements 50, 60 for joining the same to the support profiles 31. Preferably, the fastening elements 18 are screws adapted to be screwed to the wooden reinforcing members 17 of the modular solar energy-collecting enclosure elements 50, 60. The elongated holes 19 provide sufficient free play to allow for any movements cause by roof expansion. Alternatively, the system includes clamps (not shown) adapted to secure the modular solar energy-collecting enclosure elements 50, 60 to the support elements 31 to allow for any movements cause by roof expansion.

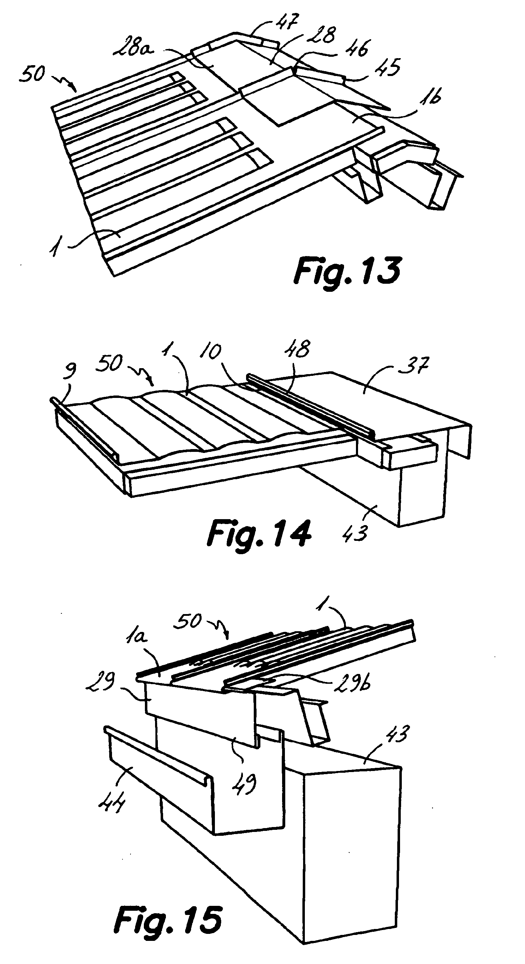

Exemplary installations of modular solar energy-collecting enclosure elements 50 employed as a roof, in association with various complementary roof elements, are described below in relation to Figures 13, 14 and 15. Although similar installations may be executed with modular solar energy-collecting enclosure elements 60 in accordance with the exemplary embodiment of Figure 3, for roof applications modular solar energy-collecting enclosure elements 50 in accordance with the exemplary embodiment of Figure 1 are preferred, because of the longitudinal orientation of their conformations.

Figure 13 shows several modular solar energy-collecting enclosure elements 50 located at an upstream end of a roof that is terminated by complementary enclosure elements that define ridge parts 28. Each ridge part 28 includes at least one accessible gap between downstream free portions 28a of outer and inner plates of the same. The upstream free portions 1b of the outer plates 1 of the modular solar energy-collecting enclosure elements 50 are plug-connected in said accessible gaps of the ridge part elements in a similar manner to that described above in relation to Figure 2. Some conformations 45 of the ridge parts 28 cover the fins 9, 10 that are matched to the adjacent modular solar energy-collecting enclosure elements 50. Cuts 46 existing in said conformations 45 allow the folding of the ridge part 28 in order to produce the desired angle between the two slopes. Covers 47 that are pressure-fitted over the conformations 45 are employed to make the mentioned cuts 46 waterproof.

Figure 14 partially shows a modular solar energy-collecting enclosure element 50 located at the side end of a roof that is terminated with complementary enclosure elements that define some lateral enclosure parts 37. Each of these enclosure parts 37 includes at least one fin 48 adapted to be matched and attached to one of the fins 9, 10 of the corresponding modular solar energy-collecting enclosure element 50 or the associated fin on a complementary enclosure element located on the corresponding side. These lateral enclosure parts 37 are also applicable to a façade.

Figure 15 shows several modular solar energy-collecting enclosure elements 50 located at a downstream end of a roof that is terminated with a gutter 44. The system incorporates complementary enclosure elements that define lower termination parts 29 that cooperate with said gutter 44. Each of said lower termination parts 29 is made of, for example, an outer plate that includes a downstream flap 49 that is partially inserted into the gutter 44 and an upstream free portion 29b adapted to be plug-connected into one or more accessible gaps 8 existing next to the downstream transverse edges of the modular solar energy-collecting enclosure elements 50, or of other adjacent complementary enclosure elements located upstream. Alternatively, the complementary enclosure element could be made of a single piece of plate incorporating both the gutter 44 and the free portion 29b upstream.

The system of this invention also comprises the mentioned heat-carrying fluid primary circuit to which one more of the heat-carrying fluid circuits of the modular solar energy-collecting enclosure elements 50, 60 that form part of the enclosure are communicated. The primary circuit is connected to an impulsion pump for circulating the heat-carrying fluid and to an expansion vessel that maintains said primary circuit at a null or negative relative pressure of approximately 0 to -10 millibars. In this way, the effect of any possible leak that could be produced in any part of the circuit would be minimised because it would tend to cause the entry of air from the outside into the circuit instead of the fluid leaking from inside the circuit to the outside.

## Claims

1. Modular solar energy-collecting enclosure element (50, 60) for buildings, applicable to façade and roof, of the type comprising an outer plate (1) and an inner plate (2) facing each other and joined together by at least one leak-tight joint line (7) along a closed perimeter, with at least one of said outer and inner plates (1, 2) including one or more conformations (3, 4) within said perimeter, spaced apart from the other of the plates to form a circuit for a heat-carrying fluid with an inlet (5) and an outlet (6), **characterised in that** said leak-tight joint line (7) is at a distance from downstream transversal edges of the outer and inner plates (1, 2) in relation to the direction of a possible flow of water over the outer plate (1), thereby providing an accessible gap (8) between respective free outer and inner portions (1a, 2a) of the outer and inner plates (1, 2) downstream from the joint line (7), said accessible gap (8) being adapted to receive plug-connected a free portion located next to an upstream transversal edge of an outer plate of a similar modular solar energy-collecting enclosure element (50, 60), or of an adjacent complementary enclosure element located downstream.

2. Modular element, in accordance with claim 1, **characterised in that** the leak-tight joint line (7) is also at a distance from an upstream transversal edge of the outer plate (1), thereby providing a free outer portion (1b) of the outer plate (1) upstream from the joint line (7), said free upstream outer portion (1 b) of the outer plate (1) being adapted to be plug-connected within said accessible gap (8) of an adjacent similar modular solar energy-collecting enclosure element (50, 60) located upstream, or in a free space existing between two outer and inner plates of an adjacent complementary enclosure element located upstream.

3. Modular element, in accordance with claim 2, **characterised in that** the leak-tight joint line (7) also provides a free inner portion (2b) of the inner plate (2) upstream from the joint line (7), with the downstream and upstream free outer portions (1a, 1b) of the outer plate (1) being longer than the corresponding downstream and upstream free inner portions (2a, 2b) of the inner plate (2), thereby, in the plug-in connection of two similar modular elements, the corresponding downstream and upstream free inner portions (2a, 2b) of the respective inner plates (2) do not overlap.

4. Modular element, in accordance with any of the preceding claims, **characterised in that** the outer plate (1) has longitudinal edges, in relation to the direction of a possible flow of water over it, from which respective fins (9, 10) extend outwards, said fins (9, 10) being configured and arranged so that they respectively match up with the fins (10, 9) of an adjacent similar modular solar energy-collecting enclosure element (50, 60) located on the corresponding side, or with similar fins of an adjacent complementary enclosure element located on the corresponding side, the matched fins (9, 10) being able to be mutually seamed or clamped at the top by means of a fitted additional cover element (11, 35).

5. Modular element, in accordance with claim 4, **characterised in that** from opposite edges of the inner plate (2), whether said edges are said transversal edges or longitudinal edges, respective flaps (15, 16) extend towards the inner side, and terminate in folds (15a, 16a) that extend towards each other, with said flaps (15, 16) and folds (15a, 16a) acting as stiffening and support elements.

6. Modular element, in accordance with claim 5, **characterised in that** it comprises reinforcing members (17) that extend from one to the other of said flaps (15, 16) with their ends fitting into the folds (15a, 16a), with said reinforcing members (17), together with the flaps (15, 16) and folds (15a, 16a) acting as stiffening elements.

7. Modular element, in accordance with claim 6, **characterised in that** some panels (21) are installed between said reinforcing members (17), with their ends fitting into the folds (15a, 16a) of the flaps (15, 16) of the inner plate (2), said panels (21) being made of an thermal insulation material that performs the functions of building thermal insulation, whether it is a closed or ventilated enclosure.

8. Modular element, in accordance with claim 7, **characterised in that** it comprises a plate (22) externally secured to the folds (15a, 16a) of the flaps (15, 16) of the inner plate (2), covering the reinforcing members (17) and the panels (21), where the plate (22) is made of a single or composite material that is suitable to carry out one or more of the following functions: forming a vapour barrier; breaking a thermal bridge; and providing fire protection.

9. Modular element, in accordance with any of claims 4 to 8, **characterised in that** it has an elongated quadrilateral shape and said opposite edges of the inner plate (2) from which the flaps (15, 16) extend, are the longest lateral edges.

10. Modular element, in accordance with claim 1, **characterised in that** said transverse edge of the downstream free portion (1a) of the outer plate (1) has a fold (12), which provides rigidity to said transverse edge and, in virtue of a certain elasticity of the plate, mechanically acts as a leak-tight barrier against the outer plate of a similar modular solar energy-collecting enclosure element (50, 60), or a complementary enclosure element located downstream.

11. Modular element, in accordance with claim 1 or 10, **characterised in that** the outer plate (1) has adhered at a distance from its transverse upstream edge at least one tab (13) adapted to receive fitted the transverse edge of the downstream free portion (1a) of the outer plate (1) of a similar adjacent modular solar energy-collecting enclosure element (50, 60) located upstream, or the downstream transverse edge of the outer plate of an adjacent complementary enclosure element located upstream.

12. Modular element, in accordance with claim 1, **characterised in that** it comprises a leak-tight strip (14) made of an elastomeric material located so as to be compressed between the downstream free portion (1a) of the outer plate (1) and the upstream free portion (1b) of the outer plate (1) of a similar adjacent modular solar energy-collecting enclosure element (50, 60) located downstream, or the outer plate of an adjacent complementary enclosure element located downstream.

13. Modular element, in accordance with claim 1, **characterised in that** said inlet (5) has a flow section area that is smaller than that of said outlet (6), in order to ensure that there is no increase of heat-carrying fluid pressure inside the modular solar energy-collecting enclosure element (50, 60).

14. Modular system for forming solar energy-collecting enclosures on buildings, applicable to façade and roof, **characterised in that** it comprises a plurality of enclosure elements, including at least one modular solar energy-collecting enclosure element (50, 60) in accordance with any of the preceding claims, and at least one complementary enclosure element (28, 29, 37, 38) having, whether on at least one of the longitudinal or transverse edges, in relation to a possible flow of water over it, at least one joint configuration for a leak-tight joint with an adjacent edge of said modular solar energy-collecting enclosure element (50, 60).

15. A modular system, in accordance with claim 14, **characterised in that** said joint configuration of said complementary enclosure element (28, 38) includes at least an accessible gap between downstream free portions (28a, 38a) of outer and inner plates of the complementary enclosure element (28, 38), with said accessible gap being able to receive plug-connected an upstream free portion of an outer plate of a modular solar energy-collecting enclosure element (50, 60) or other adjacent complementary enclosure element located downstream.

16. A modular system, in accordance with claim 15, **characterised in that** the complementary enclosure element (28) defines a ridge part (28) for a roof.

17. A modular system, in accordance with claim 14, **characterised in that** said joint configuration of the complementary enclosure element (29, 38) includes at least one upstream free portion (29b, 38b) of an outer plate of the complementary enclosure element (29, 38) adapted to be plug-connected in an accessible gap next to the downstream transverse edge of a modular solar energy-collecting enclosure element (50, 60) or other adjacent complementary enclosure element located upstream.

18. A modular system, in accordance with claim 17, **characterised in that** the complementary enclosure element (29) defines a gutter part or lower finishing element (29) cooperating with a roof gutter (44).

19. A modular system, in accordance with claim 14, **characterised in that** said joint union of said complementary enclosure element (37, 38) includes at least one fin (48, 39, 40) adapted to be matched and attached with one of the fins (9, 10) of the at least one modular solar energy-collecting enclosure element (50, 60) or a similar fin on a complementary enclosure element located on the corresponding side.

20. A modular system, in accordance with claim 19, **characterised in that** the complementary enclosure element (37) defines a lateral enclosure part (37) for either a roof or a façade.

21. A modular system, in accordance with claim 15, 17 or 19, **characterised in that** the complementary enclosure element (38) defines a complementary modular plate (38) that includes at least one opening (41) for a ventilation duct or other building construction element.

22. A modular system, in accordance with claim 15, 17 or 19, **characterised in that** the complementary enclosure element (38) defines a complementary modular plate (38) that is suitable for covering the piping (33, 34) that forms part of a heat-carrying fluid primary circuit that communicates with the heat-carrying fluid circuit of the at least one modular solar energy-collecting enclosure element (50, 60).

23. A modular system, in accordance with claim 14, **characterised in that** it comprises an open profile (32) for housing piping (33, 34) that forms part of a heat-carrying fluid primary circuit that communicates with the heat-carrying fluid circuit of the at least one modular solar energy-collecting enclosure element (50, 60), with said open profile (32) being adapted to fit between two matched fins (9, 10) of two adjacent enclosure elements with their longitudinal edges mutually adjacent, with at least one of said enclosure elements being a solar energy collector enclosure element (50, 60), a cover element (35) being included and adapted to clamp over the fins (9, 10) in a leak-tight fashion covering a mouth on said open profile (32), with said cover element (35) being detachable to allow access to said open profile (32) from the outside.

24. A modular system, in accordance with claim 23, **characterised in that** said open profile (32) is structural and adapted to be secured to a building structure (43), the enclosure elements adjacent to the open profile (32) being adapted to be fixed thereto.

25. A modular system, in accordance with claim 14, **characterised in that** it comprises support profiles (31) adapted to be secured to a building structure (43) and provided with support surfaces on which the modular solar energy-collecting enclosure elements (50, 60) and other complementary enclosure elements are supported.

26. A modular system, in accordance with claim 25, **characterised in that** said support surfaces of said support profiles (31) include elongated holes (19) for the installation of fastening elements (18) from the inside able to be secured to the modular solar energy-collecting enclosure elements (50, 60) for joining the same to the support profiles (31), said elongated holes (19) providing sufficient free play to allow for any movements caused by enclosure expansion.

27. A modular system, in accordance with claim 25, **characterised in that** it includes clamps (20) adapted to secure the modular solar energy-collecting enclosure elements (50, 60) to the support elements (31) allowing for any movements caused by enclosure expansion.

28. A modular system, in accordance with claim 14, **characterised in that** it includes a heat-carrying fluid primary circuit that communicates with the heat-carrying fluid circuit of the at least one modular solar energy-collecting enclosure element (50, 60), said primary circuit working at a null or negative relative pressure of approximately 0 to -10 millibars.

## Patentansprüche

1. Modulares Hüllelement (50, 60) zur solaren Energiegewinnung für Gebäude, welches für Fassaden und Dächer anwendbar ist, der Art umfassend eine äußere Platte (1) und eine innere Platte (2), welche sich gegenüberliegen und durch mindestens eine dichte Verbindungsnaht (7) entlang einer geschlossenen Umfangskontur miteinander verbunden sind, wobei mindestens eine der genannten äußeren Platte (1) und inneren Platte (2) eine oder mehrere Anformungen (3, 4) innerhalb der genannten Umfangskontur aufweist, welche von der anderen Platte beabstandet sind, um einen Kreislauf für ein wärmeleitendes Fluid mit einem Eingang (5) und einem Ausgang (6) zu bilden, **dadurch gekennzeichnet, dass** sich die genannte dichte Verbindungsnaht (7) mit einem Abstand zu stromabwärts transversalen Rändern der äußeren Platte (1) und inneren Platte (2) in Bezug auf die Richtung eines möglichen Wasserflusses über die äußere Platte (1) befindet, wobei auf diese Weise ein zugänglicher Spalt (8) zwischen jeweiligen freien äußeren und inneren Teilen (1a, 2a) der äußeren Platte (1) und inneren Platte (2) stromabwärts von der Verbindungsnaht (7) vorgesehen wird, wobei der genannte zugängliche Spalt (8) dazu angepasst ist, um durch Einstecken einen freien Teil aufzunehmen, welcher sich in der Nähe von einem stromaufwärts transversalen Rand einer äußeren Platte eines ähnlichen modularen Hüllelements (50, 60) zur solaren Energiegewinnung, oder von einem anliegenden komplementären stromabwärts liegenden Hüllelement, befindet.

2. Modulares Element nach Anspruch 1, **dadurch gekennzeichnet, dass** sich die dichte Verbindungsnaht (7) ebenso mit einem Abstand zu einem stromaufwärts transversalen Rand der äußeren Platte (1) befindet, wobei auf diese Weise ein freier äußerer Teil (1 b) der äußeren Platte (1) stromaufwärts von der Verbindungsnaht (7) vorgesehen wird, wobei der genannte freie stromaufwärts liegende äußere Teil (1b) der äußeren Platte (1) dazu angepasst ist, um in den genannten zugänglichen Spalt (8) von einem anliegenden ähnlichen stromaufwärts liegenden modularen Hüllelement (50, 60) zur solaren Energiegewinnung, oder in einen zwischen zwei äußeren und inneren Platten eines anliegenden komplementären stromaufwärts liegenden Hüllelements vorhandenen freien Raums eingesteckt zu werden.

3. Modulares Element nach Anspruch 2, **dadurch gekennzeichnet, dass** die dichte Verbindungsnaht (7) ebenso ein freier innerer Teil (2b) der inneren Platte (2) stromaufwärts von der Verbindungsnaht (7) vorsieht, wobei die stromabwärts und stromaufwärts liegende freie äußere Teile (1a, 1b) der äußeren Platte (1) länger als die entsprechenden stromabwärts und stromaufwärts liegenden freien inneren Teile (2a, 2b) der inneren Platte (2) sind, so dass sich beim Einstecken von zwei ähnlichen modularen Elementen, die entsprechenden stromabwärts und stromaufwärts liegenden freien inneren Teile (2a, 2b) der jeweiligen inneren Platten (2) nicht überlappen.

4. Modulares Element nach einem der vorangehenden Ansprüche, **dadurch gekennzeichnet, dass** die äußere Platte (1) longitudinale Ränder aufweist, in Bezug auf die Richtung eines möglichen Wasserflusses über dieselbe, wobei von denselben sich jeweilige Flügel (9, 10) nach außen erstrecken und die genannten Flügel (9, 10) so ausgebildet und angeordnet sind, dass sie jeweils mit den Flügeln (10, 9) von einem anliegenden ähnlichen in der entsprechenden Seite liegenden modularen Hüllelement (50, 60) zur solaren Energiegewinnung, oder mit ähnlichen Flügeln eines anliegenden komplementären in der entsprechenden Seite liegenden Hüllelements zusammenpassen, wobei die zusammenpassenden Flügel (9, 10) an der oberen Seite mit Hilfe eines angebrachten zusätzlichen Abdeckungselements (11, 35) miteinander genäht oder geklemmt werden können.

5. Modulares Element nach Anspruch 4, **dadurch gekennzeichnet, dass** sich von gegenüberliegenden Rändern der inneren Platte (2), seien die genannten Ränder die genannten transversalen Ränder oder longitudinalen Ränder, jeweilige Laschen (15, 16) zur inneren Seite erstrecken und in Einknickungen (15a, 16a) enden, welche sich zueinander erstrecken, wobei die genannten Laschen (15, 16) und Einknickungen (15a, 16a) als Versteifungs- und Tragelemente wirken.

6. Modulares Element nach Anspruch 5, **dadurch gekennzeichnet, dass** es Verstärkungselemente (17) umfasst, welche sich von der einen zur anderen der genannten Laschen (15, 16) erstrecken, wobei die Enden derselben in den Einknickungen (15a, 16a) passen und wobei die genannten Verstärkungselemente (17), zusammen mit den Laschen (15, 16) und Einknickungen (15a, 16a) als Versteifungselemente wirken.

7. Modulares Element nach Anspruch 6, **dadurch gekennzeichnet, dass** einige Paneele (21) zwischen den genannten Verstärkungselementen (17) installiert sind, wobei die Enden derselben in den Einknickungen (15a, 16a) der Laschen (15, 16) der inneren Platte (2) passen, wobei die genannten Paneele (21) aus einem wärmeisolierenden Material besteht, welches als Wärmeisolierung für Gebäude fungiert, sei es eine geschlossene oder eine belüftete Hülle.

8. Modulares Element nach Anspruch 7, **dadurch gekennzeichnet, dass** es eine Platte (22) umfasst, welche außen an den Einknickungen (15a, 16a) der Laschen (15, 16) der inneren Platte (2) befestigt ist und die Verstärkungselemente (17) und die Paneele (21) abdeckt, wobei die Platte (22) aus einem einzigen Material oder einem Verbundmaterial besteht, das dazu geeignet ist, eine oder mehrere der folgenden Funktionen durchzuführen: Bildung einer Dampfsperre; Zerstörung einer Wärmebrücke; und Bereitstellen eines Brandschutzes.

9. Modulares Element nach einem der Ansprüche 4 bis 8, **dadurch gekennzeichnet, dass** es eine längliche vierseitige Form aufweist und dass die genannten gegenüberliegenden Ränder der inneren Platte (2), von welcher sich die Laschen (15, 16) erstrecken, die längsten seitlichen Ränder sind.

10. Modulares Element nach Anspruch 1, **dadurch gekennzeichnet, dass** der genannte transversale Rand des stromabwärts liegenden freien Teils (1a) der äußeren Platte (1) eine Einknickung (12) aufweist, welche dem genannten transversalen Rand Festigkeit verleiht und gemäß einer bestimmten Elastizität der Platte, mechanisch als eine dichte Sperre gegen die äußere Platte eines ähnlichen modularen Hüllelements (50, 60) zur solaren Energiegewinnung, oder von einem komplementären stromabwärts liegenden Hüllelement, wirkt.

11. Modulares Element nach Anspruch 1 oder 10, **dadurch gekennzeichnet, dass** die äußere Platte (1) mit einem Abstand zu ihrem transversalen stromaufwärts liegenden Rand mindestens einen Ansatz (13) aufweist, welcher auf dieselbe geklebt ist und dazu angepasst ist, um durch Anbringung den transversalen Rand des stromabwärts liegenden freien Teils (1a) der äußeren Platte (1) eines ähnlichen anliegenden stromaufwärts liegenden modularen Hüllelements (50, 60) zur solaren Energiegewinnung, oder den stromabwärts liegenden transversalen Rand der äußeren Platte eines anliegenden komplementären stromaufwärts liegenden Hüllelements aufzunehmen.

12. Modulares Element nach Anspruch 1, **dadurch gekennzeichnet, dass** es einen dichten Streifen (14) umfasst, welcher aus einem elastomeren Material besteht und so angebracht ist, dass er zwischen dem stromabwärts liegenden freien Teil (1a) der äußeren Platte (1) und dem stromaufwärts liegenden freien Teil (1b) der äußeren Platte (1) eines ähnlichen anliegenden stromabwärts liegenden modularen Hüllelements (50, 60) zur solaren Energiegewinnung, oder der äußeren Platte eines anliegenden komplementären stromabwärts liegenden Hüllelements zusammengedrückt zu werden.

13. Modulares Element nach Anspruch 1, **dadurch gekennzeichnet, dass** der genannte Eingang (5) einen Strömungsquerschnitt aufweist, welcher kleiner als derjenige des genannten Ausgangs (6) ist, um sicherzustellen, dass der Druck des wärmeleitenden Fluids innerhalb des modularen Hüllelements (50, 60) zur solaren Energiegewinnung nicht steigt.

14. Modulares System zur Bildung von Hüllen zur Energiegewinnung auf Gebäude, welches für Fassaden und Dächer anwendbar ist, **dadurch gekennzeichnet, dass** es eine Vielzahl von Hüllelementen umfasst, aufweisend mindestens ein modulares Hüllelement (50, 60) zur solaren Energiegewinnung nach einem der vorangehenden Ansprüche, und mindestens ein komplementäres Hüllelement (28, 29, 37, 38), welches sei es auf mindestens eines der longitudinalen oder transversalen Ränder, in Bezug auf einen möglichen Wasserfluss darüber, mindestens eine Verbindungsausbildung für eine dichte Verbindung mit einem anliegenden Rand des genannten modularen Hüllelements (50, 60) zur solaren Energiegewinnung aufweist.

15. Modulares System nach Anspruch 14, **dadurch gekennzeichnet, dass** die genannte Verbindungsausbildung des genannten komplementären Hüllelements (28, 38) mindestens einen zugänglichen Spalt zwischen stromabwärts liegenden freien Teilen (28a, 38a) von der äußeren Platte und inneren Platte des komplementären Hüllelements (28, 38) aufweist, wobei der genannte zugängliche Spalt durch Einstecken einen stromaufwärts liegenden freien Teil einer äußeren Platte eines modularen Hüllelements (50, 60) zur solaren Energiegewinnung oder von einem anderen anliegenden komplementären stromabwärts liegenden Hüllelement aufnehmen kann.

16. Modulares System nach Anspruch 15, **dadurch gekennzeichnet, dass** das komplementäre Hüllelement (28) einen Dachfirst (28) für ein Dach definiert.

17. Modulares System nach Anspruch 14, **dadurch gekennzeichnet, dass** die genannte Verbindungsausbildung des komplementären Hüllelements (29, 38) mindestens einen stromaufwärts liegenden freien Teil (29b, 38b) einer äußeren Platte des komplementären Hüllelements (29, 38) aufweist, welcher dazu angepasst ist, um in einen zugänglichen Spalt in der Nähe vom stromabwärts liegenden transversalen Rand eines modularen Hüllelements (50, 60) zur solaren Energiegewinnung oder von einem anderen anliegenden komplementären stromaufwärts liegenden Hüllelement eingesteckt zu werden.

18. Modulares System nach Anspruch 17, **dadurch gekennzeichnet, dass** das komplementäre Hüllelement (29) ein Rinnenteil oder unteres Abschlusselement (29) definiert, welches mit einer Dachrinne (44) zusammenwirkt.

19. Modulares System nach Anspruch 14, **dadurch gekennzeichnet, dass** die genannte Verbindung des genannten komplementären Hüllelements (37, 38) mindestens einen Flügel (48, 39, 40) aufweist, welcher dazu angepasst ist, um mit einem der Flügel (9, 10) des mindestens einen modularen Hüllelements (50, 60) zur solaren Energiegewinnung oder einem ähnlichen Flügel in einem komplementären Hüllelement, welches in der entsprechenden Seite liegt, zusammenzupassen und befestigt zu werden.

20. Modulares System nach Anspruch 19, **dadurch gekennzeichnet, dass** das komplementäre Hüllelement (37) ein seitliches Hüllteil (37) für ein Dach oder eine Fassade definiert.

21. Modulares System nach Anspruch 15, 17 oder 19, **dadurch gekennzeichnet, dass** das komplementäre Hüllelement (38) eine komplementäre modulare Platte (38) definiert, welche mindestens eine Öffnung (41) für eine Lüftungsleitung oder ein anderes Bauelement für Gebäude aufweist.

22. Modulares System nach Anspruch 15, 17 oder 19, **dadurch gekennzeichnet, dass** das komplementäre Hüllelement (38) eine komplementäre modulare Platte (38) definiert, welche dazu geeignet ist, um das Leitungssystem (33, 34) abzudecken, welches Bestandteil eines Hauptkreislaufs von wärmeleitendem Fluid ist, welcher mit dem Kreislauf von wärmeleitendem Fluid des mindestens einen modularen Hüllelements (50, 60) zur solaren Energiegewinnung kommuniziert.

23. Modulares System nach Anspruch 14, **dadurch gekennzeichnet, dass** es ein offenes Profil (32) zur Aufnahme des Leitungssystems (33, 34) umfasst, welches Bestandteil eines Hauptkreislaufs von wärmeleitendem Fluid ist, welcher mit dem Kreislauf von wärmeleitendem Fluid des mindestens einen modularen Hüllelements (50, 60) zur solaren Energiegewinnung kommuniziert, wobei das genannte offene Profil (32) dazu angepasst ist, um zwischen zwei zusammenpassenden Flügeln (9, 10) von zwei anliegenden Hüllelementen zu passen, wobei die longitudinalen Ränder derselben anliegen und das mindestens eine der genannten Hüllelemente ein Hüllelement (50, 60) zur solaren Energiegewinnung ist, wobei ein Abdeckungselement (35) enthalten ist und dazu angepasst ist, um über die Flügel (9, 10) dichtend zu klemmen, wobei eine Öffnung in dem genannten offenen Profil (32) abgedeckt wird und das genannte Abdeckungselement (35) abnehmbar ist, um den Zugang zum genannten offenen Profil (32) von außen zu ermöglichen.

24. Modulares System nach Anspruch 23, **dadurch gekennzeichnet, dass** das genannte offene Profil (32) strukturell ist und dazu angepasst ist, um an eine Gebäudestruktur (43) befestigt zu werden, wobei die Hüllelemente, die an das offene Profil (32) anliegen, dazu angepasst sind, daran fixiert zu werden.

25. Modulares System nach Anspruch 14, **dadurch gekennzeichnet, dass** es Tragprofile (31) umfasst, welche dazu angepasst sind, um an eine Gebäudestruktur (43) befestigt zu werden, und welche mit Tragflächen versehen sind, auf welche die modulare Hüllelemente (50, 60) zur solaren Energiegewinnung und andere komplementäre Hüllelemente getragen werden.

26. Modulares System nach Anspruch 25, **dadurch gekennzeichnet, dass** die genannten Tragflächen der genannten Tragprofile (31) Längslöcher (19) für die Installation von Sicherungselementen (18) von innen aufweisen, welche an die modulare Hüllelemente (50, 60) zur solaren Energiegewinnung befestigt werden können, um diese an die Tragprofile (31) zu befestigen, wobei die Längslöcher (19) einen genügenden freien Spiel bereitstellen, um jene durch die Ausdehnung der Hülle bewirkten Bewegung zu ermöglichen.

27. Modulares System nach Anspruch 25, **dadurch gekennzeichnet, dass** es Klemmen (20) aufweist, welche dazu angepasst sind, um die modulare Hüllelemente (50, 60) zur solaren Energiegewinnung an die Tragelemente (31) zu befestigen, wobei jene durch die Ausdehnung der Hülle bewirkten Bewegung ermöglicht wird.

28. Modulares System nach Anspruch 14, **dadurch gekennzeichnet, dass** es einen Hauptkreislauf von wärmeleitendem Fluid aufweist, welcher mit dem Kreislauf von wärmeleitendem Fluid des mindestens einen modularen Hüllelements (50, 60) zur solaren Energiegewinnung kommuniziert, wobei der genannte Hauptkreislauf mit einem Relativdruck von Null oder mit einem negativen Relativdruck von etwa 0 bis -10 Millibar arbeitet.

## Revendications

1. Élément de châssis collecteur d'énergie solaire modulaire (50,60) pour bâtiments, applicable aux façades et aux toits, du genre comportant une plaque extérieure (1) et une plaque intérieure (2) se faisant face et unies entre elles par au moins une ligne de jonction étanche (7) le long d'un périmètre fermé, au moins une de ces plaques extérieure et intérieure (1,2) comportant une ou plusieurs conformations (3,4) à l'intérieur de ce périmètre, écartées de l'autre plaque pour former un circuit pour un fluide caloporteur ayant une entrée (5) et une sortie (6), **caractérisé en ce que** cette ligne de jonction étanche (7) est écartée des bords transversaux en aval des plaques extérieure et intérieure (1,2) par rapport à la direction d'un possible écoulement d'eau sur la plaque extérieure (1), en offrant ainsi un fossé accessible (8) entre les portions extérieure et intérieure libres respectives (1a, 2a) des plaques extérieure et intérieure (1, 2) en aval de la ligne de jonction (7), ce fossé accessible (8) étant adapté pour recevoir une portion libre reliée par une fiche située proche au bord transversal en amont d'une plaque extérieure d'un élément de châssis collecteur d'énergie solaire modulaire similaire (50, 60), ou d'un élément de châssis complémentaire adjacent situé en aval.

2. Élément modulaire, conformément à la revendication 1, **caractérisé en ce que** la ligne de jonction étanche (7) est également écartée d'un bord transversal en amont de la plaque extérieure (1), en offrant ainsi une portion extérieure libre (1 b) de la plaque extérieure (1) en amont de la ligne de jonction (7), cette portion extérieure libre en amont (1 b) de la plaque extérieure (1) étant adaptée pour être reliée par une fiche à ce fossé accessible (8) d'un élément de châssis de collecteur d'énergie solaire modulaire similaire adjacent (50, 60) situé en amont ou dans un espace libre existant entre deux plaques extérieure et intérieure d'un élément de châssis complémentaire adjacent situé en amont.

3. Élément modulaire, conformément à la revendication 2, **caractérisé en ce que** la ligne de jonction étanche (7) offre également une portion intérieure libre (2b) de la plaque intérieure (2) en amont de la ligne de jonction (7), les portions extérieures libres (1a, 1 b), en aval et en amont, de la plaque extérieure (1) étant plus longues que les portions intérieures libres correspondantes en aval et en amont (2a, 2b) de la plaque intérieure (2), et ainsi, dans la liaison enfichable de deux éléments modulaires similaires correspondants, les portions intérieures libres en aval et en amont (2a, 2b) des plaques intérieures respectives (2) ne se chevauchent pas.

4. Élément modulaire, conformément à une quelconque des revendications précédentes, **caractérisé en ce que** la plaque extérieure (1) possède des bords longitudinaux, par rapport à la direction d'un écoulement d'eau possible sur celle-ci, dont des ailettes respectives (9,10) s'étendent vers l'extérieur, ces ailettes (9, 10) étant configurées et aménagées de sorte qu'elles combinent respectivement avec les ailettes (10,9) d'un élément de châssis de collecteur d'énergie solaire modulaire adjacent similaire (50, 60) situé sur le côté correspondant ou avec des ailettes similaires d'un élément de châssis adjacent complémentaire situé sur le coté correspondant, les ailettes combinées (9,10) pouvant être mutuellement soudées ou agrafées sur le haut au moyen d'un élément de couvercle complémentaire rapporté (11,35).

5. Élément modulaire, conformément à la revendication 4, **caractérisé en ce que**, depuis des bords opposés de la plaque intérieure (2) que ces bords soient des bords transversaux ou des bords longitudinaux, des volets respectifs (15, 16) s'étendent vers le côté intérieur et finissent par des rabats (15a, 16a) s'étendant les uns vers les autres, ces volets (15,16) et rabats (15a, 16a) agissant comme éléments de raidissement et de support.

6. Élément modulaire, conformément à la revendication 5, **caractérisée en ce qu'**il comporte des membres de renfort (17) s'étendant de l'un à l'autre de ces volets (15, 16) leurs extrémités rentrant dans les rabats (15a, 16a), ces membres de renforcement (17) ainsi que les volets (15,16) et rabats (15a, 16a) agissant comme éléments de raidissement.

7. Élément modulaire, conformément à la revendication 6, **caractérisé en ce que** certains panneaux (21) sont installés entre ces membres de renforcement (17), leurs extrémités étant rentrées dans les rabats (15a, 16a) des volets (15,16) de la plaque intérieure (2), ces panneaux (21) étant faits en un matériau d'isolement thermique faisant l'office d'isolement thermique du bâtiment, aussi bien s'il s'agit d'un châssis fermé que d'un châssis ventilé.

8. Élément modulaire, conformément à la revendication 7, **caractérisé en ce qu'**il comporte une plaque (22) fixée à l'extérieur aux rabats (15a, 16a) des volets (15, 16) de la plaque intérieure (2), couvrant les membres de renforcement (17) et les panneaux (21), où la plaque (22) est faite en un matériau simple ou composite approprié pour faire une ou plusieurs des fonctions suivantes: former une barrière de vapeur; rompre un pont thermique, et offrir une protection contre les incendies.

9. Élément modulaire, conformément à une quelconque des revendications 4 à 8, **caractérisé en ce qu'**il est allongé en forme de quadrilatère et ces bords opposés de la plaque intérieure (2) d'où s'étendent les volets (15,16), sont les bords latéraux les plus longs.

10. Élément modulaire, conformément à la revendication 1, **caractérisé en ce que** ce bord transversal de la portion libre en aval (1a) de la plaque extérieure (1) possède un rabat (12) fournissant de la raideur à cet angle transversal et, grâce à une certaine élasticité de la plaque, il fait mécaniquement l'office de barrière étanche contre la plaque extérieure d'un élément de châssis collecteur d'énergie solaire modulaire similaire (50, 60), ou d'un élément de châssis complémentaire situé en aval.

11. Élément modulaire, conformément à la revendication 1 ou 10, **caractérisé en ce que** la plaque extérieure (1) possède adhéré, écarté de son bord transversal en amont, au moins un onglet (13) adapté pour y recevoir le bord transversal de la portion libre en aval (1a) de la plaque extérieure (1) d'un élément de châssis collecteur d'énergie solaire modulaire adjacent similaire (50, 60), situé en amont, ou bien le bord transversal en aval de la plaque extérieure d'un élément de châssis complémentaire adjacent situé en amont.

12. Élément modulaire, conformément à la revendication 1, **caractérisé en ce qu'**il comporte une bande étanche (14) faite en matériau élastomère, située de sorte à être comprimée entre la portion libre en aval (1a) de la plaque extérieure (1) et la portion libre en amont (1b) de la plaque extérieure (1) d'un élément de châssis collecteur d'énergie solaire modulaire adjacent similaire (50, 60) situé en aval, ou bien la plaque extérieure d'un élément de châssis adjacent complémentaire situé en aval.

13. Élément modulaire, conformément à la revendication 1, **caractérisé en ce que** cette entrée (5) possède une région de la section d'écoulement qui est plus petite que celle de cette sortie (6), afin d'assurer qu'il n'y ait pas d'augmentation de pression du fluide caloporteur à l'intérieur de l'élément de châssis collecteur d'énergie solaire modulaire (50, 60).

14. Système modulaire pour former des châssis collecteurs d'énergie solaire dans des bâtiments, applicable à la façade et au toit, **caractérisé en ce qu'**il comporte une pluralité d'éléments de châssis, comprenant au moins un élément de châssis collecteur d'énergie solaire modulaire (50, 60) conformément à une quelconque des revendications précédentes et au moins un élément de châssis complémentaire (28, 29, 37, 38) ayant, sur au moins un des bords longitudinaux ou transversaux, par rapport à un possible écoulement d'eau au-dessus, au moins une configuration de jonction pour une jonction étanche avec un bord adjacent de cet élément de châssis collecteur d'énergie solaire modulaire (50, 60).

15. Un système modulaire, conformément à la revendication 14, **caractérisé en ce que** cette configuration de jonction de cet élément de châssis complémentaire (28, 38) comporte au moins un fossé accessible entre les portions libres en aval (28a, 38a) des plaques extérieure et intérieure de l'élément de châssis complémentaire (28, 38) ce fossé accessible pouvant recevoir, enfichée, une portion libre en amont d'une plaque extérieure d'un élément de châssis collecteur d'énergie solaire modulaire (50, 60) ou d'un autre élément de châssis adjacent complémentaire situé en aval.

16. Un système modulaire, conformément à la revendication 15, **caractérisé en ce que** l'élément de châssis complémentaire (28) définit une partie dorsale (28) pour un toit.

17. Un système modulaire, conformément à la revendication 14, **caractérisé en ce que** cette configuration de jonction de l'élément de châssis complémentaire (29, 38) comporte au moins une portion libre en amont (29b, 38b) d'une plaque extérieure de l'élément de châssis complémentaire (29, 38) adapté pour être enfiché dans un fossé accessible proche au bord transversal en aval d'un élément de châssis collecteur d'énergie solaire modulaire (50, 60) ou d'un autre élément de châssis adjacent complémentaire situé en amont.

18. Un système modulaire, conformément à la revendication 17, **caractérisé en ce que** l'élément de châssis complémentaire (29) définit une partie de gouttière ou élément de finition inférieur (29) coopérant avec une gouttière du toit (44).

19. Un système modulaire, conformément à la revendication 14, **caractérisé en ce que** cette union de jonction de cet élément de châssis complémentaire (37, 38) comporte au moins une ailette (48, 39, 40) adaptée pour être combinée et fixée à une des ailettes (9, 10) d'au moins un élément de châssis collecteur d'énergie solaire modulaire (50, 60) ou d'une ailette similaire sur un élément de châssis complémentaire situé sur le côté correspondant.

20. Un système modulaire, conformément à la revendication 19, **caractérisé en ce que** l'élément de châssis complémentaire (37) définit une partie de châssis latérale (37) pour un toit ou une façade.

21. Un système modulaire, conformément à la revendication 15, 17 ou 19, **caractérisé en ce que** l'élément de châssis complémentaire (38) définit une plaque modulaire complémentaire (38) comportant au moins une ouverture (41) pour un tuyau de ventilation ou autre élément de construction.

22. Un système modulaire conformément à la revendication 15, 17 ou 19, **caractérisé en ce que** l'élément de châssis complémentaire (38) définit une plaque modulaire complémentaire (38) appropriée pour couvrir la tuyauterie (33, 34) faisant partie d'un circuit primaire de fluide caloporteur communiquant avec le circuit de fluide caloporteur d'au moins un élément de châssis collecteur d'énergie solaire modulaire (50, 60).

23. Un système modulaire conformément à la revendication 14, **caractérisé en ce qu'**il comporte un profil ouvert (32) pour y loger la tuyauterie (33, 34) faisant partie d'un circuit primaire de fluide caloporteur communiquant avec le circuit de fluide caloporteur d'au moins un élément de châssis collecteur d'énergie solaire modulaire (50, 60), ce profil ouvert (32) étant adapté pour être introduit entre deux ailettes combinées (9, 10) de deux éléments de châssis adjacents, leurs bords longitudinaux étant adjacents entre eux, au moins un de ces éléments de châssis étant un élément de châssis collecteur d'énergie solaire (50, 60), un élément de couvercle (35) étant compris et adapté pour être fixé sur les ailettes (9, 10) de façon étanche, couvrant une bouche de ce profil ouvert (32), cet élément de couvercle (35) étant détachable pour permettre l'accès à ce profil ouvert (32) depuis l'extérieur.

24. Un système modulaire conformément à la revendication 23, **caractérisé en ce que** ce profil ouvert (32) est structurel et adapté pour être fixé sur une structure d'un bâtiment (43), les éléments de châssis adjacents au profil ouvert (32) étant adapté pour y être fixé.

25. Un système modulaire conformément à la revendication 14, **caractérisé en ce qu'**il comporte des profils de support (31) adaptés pour être fixés sur une structure de bâtiment (43) et pourvu de surfaces de support sur lesquels sont supportés les éléments de châssis collecteurs d'énergie solaire modulaire (50, 60) et d'autres éléments de châssis complémentaires.

26. Un système modulaire conformément à la revendication 25, **caractérisé en ce que** ces surfaces de support de ces profils de support (31) comportent des trous allongés (19) pour l'installation d'éléments de fixation (18) depuis l'intérieur capables d'être fixés aux éléments de châssis collecteurs d'énergie solaire modulaire (50, 60) pour les unir aux profils de support (31), ces trous allongés (19) fournissant un espace libre suffisant permettant tout mouvement causé par l'expansion du châssis.

27. Un système modulaire conformément à la revendication 25, **caractérisé en ce qu'**il comprend des agrafes (20) adaptées pour fixer les éléments de châssis collecteurs d'énergie solaire modulaire (50, 60) aux éléments de support (31) permettant tout mouvement causé par l'expansion du châssis.

28. Un système modulaire conformément à la revendication 14, **caractérisé en ce qu'**il comporte un circuit primaire de fluide caloporteur communiquant avec le circuit de fluide caloporteur d'au moins un élément de châssis collecteur d'énergie solaire modulaire (50, 60), ce circuit primaire travaillant à une pression nulle ou négative aux alentours de 0 à 10 millibars.
